# EUROPEAN PATENT APPLICATION

(11) **EP 3 527 621 A1**
(43) Date of publication of application: **21.08.2019**
(21) Application number: 17860263.7
(22) Date of filing: 11.10.2017
(51) Int. Cl.: C08L 67/02, C08K 7/14, C08L 23/30

(54) **RESIN COMPOSITION AND MOLDED ARTICLE**

(30) Priority: 14.10.2016 JP 2016202820
(71) Applicant: Mitsui Chemicals, Inc., Minato-ku Tokyo 105-7122 (JP)
(72) Inventor: TAKAHASHI, Yosuke, Chiba 299-0265 (JP); MATSUNAGA, Koji, Chiba 299-0265 (JP); KAWABE, Kuniaki, Chiba 299-0265 (JP); KANAYA, Hirotaka, Chiba 299-0265 (JP)
(74) Representative: Hoffmann Eitle
(86) International application number: PCT/JP2017/036815
(87) International publication number: WO 2018/070425

(57) **Abstract**

The purpose of the present invention is to provide a polyester resin composition which exhibits excellent shock resistance, tensile strength, modulus of elasticity, and molding properties. This resin composition contains 50-95 parts by mass of a polyester resin (A), 0.5-10 parts by mass of an oxidized olefin wax (B), and 5-40 parts by mass of an inorganic filler (C), wherein (A) satisfies (A-1) and (A-2), and (B) satisfies (B-1) and (B-2). (A-1) Containing a constituent unit (a1) derived from an aromatic dicarboxylic acid, and a constituent unit (a2) derived from a C2-10 diol. (A-2) The melting point (Tm) according to DSC being in the range of 200-245°C. (B-1) The weight-average molecular weight calculated in terms of polystyrene measured according to GPC being 8,000-20,000. (B-2) Being an oxidized modified product of a homopolymer or copolymer of at least one type selected from ethylene and C3-12 α-olefin.

## Description

### Technical Field

The present invention relates to a resin composition having a specific constitution, and a molded article obtained from the resin composition.

### Background Art

Polyester resins such as polybutylene terephthalate are widely used for injection molding. It is known that the mechanical strength and heat resistance of such resins are enhanced when an inorganic filler such as a glass fiber is contained.

### Citation List

### Patent Literature

PTL 1
Japanese Patent Application Laid-Open No. HI0-60242

### Summary of Invention

### Technical Problem

It has been confirmed that a polyester resin composition containing an inorganic filler such as a glass fiber tends to be easily brittle broken in a stress concentration region depending on the shape of a molded product, in particular, when the amount of the filler compounded is relatively large. Examples of a resin that exerts an effect of modifying impact resistance when compounded to a polyester resin include an ethylene/glycidyl methacrylate copolymer, but the effect of modifying impact resistance is not sufficient in some cases. Alternatively, the amount compounded is needed to be increased in order to increase the effect of modification, and in such a case, tensile strength, elastic modulus, molding processability, and/or the like may be sacrificed.

An object of the present invention is to provide a polyester resin composition excellent in impact resistance, and also excellent in tensile strength, elastic modulus and molding processability, as well as a molded article obtained therefrom.

### Solution to Problem

The present inventors have made intensive studies in order to solve the above problems. As a result, the present inventors have found that the above problems can be solved using a resin composition having a specific constitution, leading to completion of the present invention.

Specifically, the present invention relates to the following resin composition and molded article obtainable from the resin composition.
[1] A resin composition containing a polyester resin (A), an olefin-based oxidized wax (B), and an inorganic filler (C), wherein
   the resin composition comprises 50 to 95 parts by mass of (A), 0.5 to 10 parts by mass of (B), and 5 to 40 parts by mass of (C), provided that a total content of (A), (B) and (C) is 100 parts by mass,
   (A) satisfies the following (A-1) and (A-2), and
   (B) satisfies the following (B-1) and (B-2),
   (A-1) an aromatic dicarboxylic acid-derived constituent unit (a1) and a C₂₋₁₀ diol-derived constituent unit (a2) are contained, and
   (A-2) a melting point (Tm) according to a differential scanning calorimeter (DSC) falls within the range of 200 to 245°C;
   (B-1) a weight average molecular weight Mw in terms of polystyrene measured by gel permeation chromatography (GPC) is 8,000 to 20,000, and
   (B-2) (B) is an oxidation modified product of a homopolymer or copolymer of at least one selected from ethylene and C₃₋₁₂ α-olefin.
[2] The resin composition according to [1], wherein (B) is an oxidation modified product of a copolymer of ethylene and at least one α-olefin selected from C₃₋₁₂ α-olefin, in (B-2).
[3] The resin composition according to [1] or [2], in which (B) satisfies the following (B-3),
   (B-3) an acid value is 1 to 40 mgKOH/g.
[4] The resin composition according to any one of [1] to [3], wherein (B) satisfies the following (B-4),
   (B-4) a crystallinity is 70% or less.
[5] The resin composition according to any one of [1] to [4], wherein (A) satisfies the following (A-3),
   (A-3) a crystallization temperature (Tc) according to a differential scanning calorimeter (DSC) is 150°C or more.
[6] The resin composition according to any one of [1] to [5], containing a glass fiber as (C).
[7] The resin composition according to any one of [1] to [6], wherein (A) contains polybutylene terephthalate.
[8] The resin composition according to any one of [1] to [7], comprising 55 to 80 parts by mass of (A), 2 to 5 parts by mass of (B), and 20 to 40 parts by mass of (C), provided that a total content of (A), (B) and (C) is 100 parts by mass.
[9] A molded article, comprising the resin composition according to any one of [1] to [8].

### Advantageous Effects of Invention

According to the present invention, there can be provided a polyester resin composition excellent in impact resistance, and also excellent in tensile strength, elastic modulus and molding processability, as well as a molded article obtained therefrom.

### Brief Description of Drawings

FIG. 1 illustrates a graph plotting a relationship between the Charpy impact strength at 23°C and the bending elastic modulus of each of the resin compositions obtained in Examples and Comparative Examples; and
FIG. 2 illustrates a graph plotting a relationship between the Charpy impact strength at -30°C and the bending elastic modulus of each of the resin compositions obtained in Examples and Comparative Examples.

### Description of Embodiments

Hereinafter, the resin composition of the present invention, and a molded article obtained therefrom will be described in detail.

### A. Resin Composition

The resin composition of the present invention contains polyester resin (A), olefin-based oxidized wax (B), and inorganic filler (C).

Provided that the total content of (A), (B) and inorganic filler (C) in the resin composition of the present invention is 100 parts by mass, the amount of (A) is 50 to 95 parts by mass, preferably 50 to 94.5 parts by mass, more preferably 55 to 80 parts by mass. The amount of (B) is 0.5 to 10 parts by mass, preferably 2 to 5 parts by mass. The amount of inorganic filler (C) is 5 to 40 parts by mass, preferably 20 to 40 parts by mass.

When the amount of olefin-based oxidized wax (B) falls within the range, impact resistance can be enhanced. Molding processability of the resin composition can also be enhanced. Olefin-based oxidized wax (B) enhances impact resistance of the resin composition, as described below, and can achieve an effect of enhancing the impact resistance even if the amount of (B) in the composition is not so large. Therefore, the loss of tensile strength and/or elastic modulus of the resin composition due to addition of olefin-based oxidized wax (B) can be decreased.

Hereinafter, each component and each requirement will be described.

### 1. Polyester Resin (A)

The resin composition of the present invention may include only one polyester resin (A), or may include two or more polyester resins (A), provided that the following requirements (A-1) and (A-2) are satisfied.

### Requirement (A-1): an aromatic dicarboxylic acid-derived constituent unit (a1) and a C₂₋₁₀ diol-derived constituent unit (a2) are contained.

An aromatic dicarboxylic acid-derived constituent unit (a1) (hereinafter, sometimes simply referred to as "constituent unit (a1)".) is specifically a constituent unit constitutionally having a structure where -OH is removed from each of two carboxyl groups contained in the aromatic dicarboxylic acid. Such an aromatic dicarboxylic acid may be used singly or in combinations of two or more thereof, and specific examples include terephthalic acid, isophthalic acid, 2-methylterephthalic acid, and naphthalenedicarboxylic acid.

In particular, terephthalic acid is preferable from the viewpoint of enhancements in mechanical properties and processability.

A C₂₋₁₀ diol-derived constituent unit (a2) (hereinafter, sometimes simply referred to as "constituent unit (a2)".) is specifically a constituent unit constitutionally having a structure where -H is removed from two hydroxyl groups contained in the C₂₋₁₀ diol. Such a C₂₋₁₀ diol may be used singly or in combinations of two or more thereof, and the following compounds can be specifically exemplified.

Examples of the C₂₋₁₀ diol include C₂₋₁₀ aliphatic diols. Examples of such aliphatic diols include 1,2-ethanediol (ethylene glycol: C₂), 1,3-propanediol (trimethylene glycol: C₃), 1,2-propanediol (propylene glycol: C₃), 1,4-butanediol (tetramethylene glycol: C₄), 2,2-dimethylpropane-1,3-diol (neopentyl glycol: C₅), 1,6-hexanediol (hexamethylene glycol: C₆), 1,8-octanediol (octamethylene glycol: C₈), and 1,9-nonanediol (nonamethylene glycol: C₉).

The C₂₋₁₀ diol may also be a diol having an alkyl group in a side chain (hereinafter, also referred to as "side-chain alkyl group-containing glycol".). Examples of the side-chain alkyl group-containing glycol include 2-methyl-1,3-propanediol, 2-ethyl-1,3-propanediol, 2-hexyl-1,3-propanediol, 2-hexyl-1,6-propanediol, neopentyl glycol, 2-ethyl-2-methyl-1,3-propanediol, 2,2-diethyl-1,3-propanediol, 2-methyl-2-n-butyl-1,3-propanediol, 1,3-nonanediol, and 2-methyl-1,8-octanediol.

In particular, 1,4-butanediol is preferable from the viewpoint of a more increase in crystallization rate.

The molar ratio ((a1)/(a2)) of constituent unit (a1) and constituent unit (a2) preferably falls within the range of 0.9 to 1.1 from the viewpoint of more enhancements in mechanical properties, heat resistance, processability, and electric properties.

Polyester resin (A) is preferably constituted from only constituent units (a1) and (a2), and may contain other polyvalent carboxylic acid- and polyhydric alcohol-derived constituent units as long as the effects of the present invention are not remarkably impaired. Examples of such other polyvalent carboxylic acid include various dicarboxylic acids, for example, aliphatic dicarboxylic acids such as malonic acid, oxalic acid, succinic acid, glutaric acid, adipic acid, pimelic acid, suberic acid, azelaic acid, sebacic acid, and undecadicarboxylic acid; furandicarboxylic acids such as 2,5-furandicarboxylic acid; and alicyclic dicarboxylic acids such as 1,4-cyclohexanedicarboxylic acid and 1,3-cyclohexanedicarboxylic acid, and carboxylic acid ester thereof. Examples of such other polyhydric alcohol include tri- or higher polyhydric alcohols such as aromatic diol, trimethylolethane, and glycerin; tri- or higher polyvalent carboxylic acids such as butanetricarboxylic acid and trimellitic acid; and oxydicarboxylic acids such as 4-hydroxyphthalic acid.

The content of such other constituent unit(s) is preferably 20mol% or less, more preferably 10mol% or less, particularly preferably 5mol% or less based on 100mol% of the total of constituent units (a1) and (a2) and such other constituent unit(s).

Requirement (A-2): the melting point (Tm) according to a differential scanning calorimeter (DSC) falls within the range of 200 to 245°C. The melting point (Tm) of polyester resin (A) preferably falls within the range of 210 to 240°C, more preferably 215 to 235°C.

When the melting point (Tm) is 245°C or less, the processing temperature is not a high temperature, and a reduction in molecular weight due to heat in kneading and/or molding of the resin composition can be suppressed. When the melting point (Tm) is 200°C or more, the heat distortion temperature of the polyester resin is high, and heat resistance is improved.

Polyester resin (A) may also be modified by a small amount of a tri- or higher polyhydroxy compound and/or polycarboxylic acid such as triol and/or tricarboxylic acid in order to allow the melting point (Tm) to fall within the temperature range.

Examples of polyester resin (A) that satisfies requirement (A-1) and requirement (A-2) include polybutylene terephthalate (PBT), polytrimethylene terephthalate (PTT), polybutylene naphthalate (PBN), and a polyethylene isophthalate/terephthalate copolymer. In particular, polybutylene terephthalate (PBT) is preferable from the viewpoint of more enhancements in mechanical properties, heat resistance, processability, and electric properties.

Polyester resin (A) preferably satisfies the following requirement (A-3).

Requirement (A-3): the crystallization temperature (Tc) according to a differential scanning calorimeter (DSC) falls within the range of 150°C or more.

A polyester resin that satisfies requirement (A-3) is preferable because such a resin is started to be crystallized at a higher temperature in cooling and therefore is high in crystallization rate and excellent in moldability. It is considered that the difference between the crystallization temperature of polyester resin (A) and the crystallization temperature of olefin-based oxidized wax (B) is easily made and crystallization of polyester resin (A) as a component precedingly progresses in a resin composition to be obtained, and therefore the dispersed state of olefin-based oxidized wax (B) is particularly preferable for an enhancement in impact strength of the composition after solidification.

The most preferable polyester resin that satisfies requirements (A-1) to (A-3) is polybutylene terephthalate (PBT).

Polyester resin (A) preferably satisfies the following requirement (A-4).

Requirement (A-4): the number average molecular weight (Mn) is 10,000 to 50,000 and the weight average molecular weight (Mw) is 60,000 to 300,000 in terms of polystyrene measured by gel permeation chromatography (GPC).

A polyester resin that satisfies requirement (A-4) is preferable because such a resin is excellent in mechanical properties, heat resistance, and processability.

### 2. Olefin-Based Oxidized Wax (B)

The resin composition of the present invention may include only one olefin-based oxidized wax (B), or may include two or more olefin-based oxidized waxes (B), provided that the following requirements (B-1) and (B-2) are satisfied.

Requirement (B-1): the weight average molecular weight (Mw) in terms of polystyrene measured by gel permeation chromatography (GPC) is 8,000 to 50,000. The upper limit of the weight average molecular weight (Mw) is preferably 30,000, more preferably 25,000, further preferably 20,000, particularly preferably 15,000. The lower limit of the weight average molecular weight (Mw) is preferably 8,500, more preferably 9,000, further preferably 9,500.

When the weight average molecular weight (Mw) of olefin-based oxidized wax (B) falls within the range, olefin-based oxidized wax (B) is more uniformly dispersed in polyester resin (A), the effect of modification comparable to that of polyolefin-based impact resistance modifier (D) is exerted, and a resin composition having more sufficient impact resistance is obtained. Processability and kneading properties of the resin composition is also improved.

Requirement (B-2): (B) is an oxidation modified product of a homopolymer or copolymer of at least one selected from ethylene and C₃₋₁₂ α-olefin (hereinafter, also simply referred to as "olefin wax" or "unmodified olefin wax").

Unsaturated carboxylic acid-modified wax where the olefin wax is modified by an unsaturated carboxylic acid is also characterized by having an affinity with various polar polymers, metals, and the like due to introduction of a polar group into unmodified olefin wax, as in olefin-based oxidized wax (B) being an oxidation modified product of the olefin wax. In the present invention, however, effective wax is olefin-based oxidized wax (B) which is oxidation modified, and the unsaturated carboxylic acid-modified wax is not effective surprisingly.

While the reason is not clear, use of unsaturated carboxylic acid-modified wax which is modified by an unsaturated carboxylic acid, in particular, which has a structure like maleic anhydride, causes the surface of inorganic filler (C) to be covered with the unsaturated carboxylic acid-modified wax due to a favorable affinity of the unsaturated carboxylic acid-modified wax with the surface of inorganic filler (C) and a sizing agent which can be contained in the case where inorganic filler (C) is a fiber. Therefore, the unsaturated carboxylic acid-modified wax inhibits the interaction of polyester resin (A) and inorganic filler (C), thereby causing the effect of enhancing mechanical properties (impact resistance, and the like) to be hardly sufficiently exerted by inorganic filler (C). On the other hand, olefin-based oxidized wax (B), while having a certain affinity with inorganic filler (C) or a sizing agent thereof, does not have a high affinity comparable to the affinity of the unsaturated carboxylic acid-modified wax. Therefore, olefin-based oxidized wax (B) hardly causes inhibition of the interaction of polyester resin (A) and inorganic filler (C) due to covering of the surface of inorganic filler (C). Furthermore, olefin-based oxidized wax (B) is considered to be easier to enhance impact resistance of the resin composition because the wax also has a high affinity with polyester resin (A) and is easily uniformly dispersed in the resin composition.

The reason why the polyester resin composition of the present invention and a molded article to be obtained therefrom are excellent in various mechanical/physical properties and molding processability is considered as follows. Olefin-based oxidized wax (B) has a certain affinity with inorganic filler (C) or a sizing agent thereof, and is partially present on the surface of inorganic filler (C), thereby suppressing fracture due to mutual interference of inorganic filler (C) at the time of melt-kneading in production or molding of the resin composition. Furthermore, it is also considered that olefin-based oxidized wax (B) also has a high affinity with polyester resin (A), thereby resulting in an enhancement in fluidity of the resin composition and thus an improvement in molding processability. Moreover, fluidity of the resin composition can also be enhanced in injection molding of the resin composition, resulting in an improvement in molding processability. In addition, olefin-based oxidized wax (B) can suppress fracture of inorganic filler (C) due to a shear force in a mold. That is, it is presumed that, when inorganic filler (C) is a fiber, the fiber length is maintained by the suppression of fracture, to result in enhancements in tensile strength and elastic modulus by olefin-based oxidized wax (B).

Olefin-based oxidized wax (B) preferably satisfies the following requirement (B-3).

Requirement (B-3): the acid value is 1 to 40 mgKOH/g. The acid value is preferably 5 to 30 mgKOH/g, more preferably 10 to 25 mgKOH/g, particularly preferably 11 to 21 mgKOH/g, especially preferably 15 to 20 mgKOH/g. The acid value refers to the number of milligrams of potassium hydroxide required for neutralization of 1 g of a specimen.

Olefin-based oxidized wax (B) that satisfies requirement (B-3) is preferable because the wax has a high affinity with both polyester resin (A) and inorganic filler (C). While it is known that the unsaturated carboxylic acid-modified wax also has the above acid value, the unsaturated carboxylic acid-modified wax hardly sufficiently enhances impact resistance, as described above.

Olefin-based oxidized wax (B) preferably satisfies the following requirement (B-4).

Requirement (B-4): the crystallinity falls within the range of 10% or more and 70% or less. The crystallinity is preferably 15% or more and 65% or less, more preferably 20% or more and 60% or less, particularly preferably 25% or more and 55% or less. It is considered that olefin-based oxidized wax (B) which satisfies requirement (B-4) is favorable in dispersibility in polyester resin (A) when crystallized, and easier to enhance impact resistance of the resin composition.

Olefin-based oxidized wax (B) preferably satisfies the following requirement (B-5).

Requirement (B-5): the value of (crystallization temperature of polyester resin (A)) minus (crystallization temperature of olefin-based oxidized wax (B)) falls within the range of 80°C or more and 150°C or less, preferably 85°C or more and 145°C or less, more preferably 90°C or more and 140°C or less. It is considered that olefin-based oxidized wax (B) which satisfies requirement (B-5) is favorable in dispersibility in polyester resin (A) when crystallized, and easier to enhance impact resistance of the resin composition.

Requirement (B-6): the value of (density of polyester resin (A)) minus (density of olefin-based oxidized wax (B)) falls within the range of 330 kg/m³ or more and 400 kg/m³ or less, preferably 340 kg/m³ or more and 390 kg/m³ or less, more preferably 350 kg/m³ or more and 380 kg/m³ or less. It is considered that olefin-based oxidized wax (B) which satisfies requirement (B-6) is excellent in matching with polyester resin (A) and easier to enhance impact resistance of the resin composition.

Olefin-based oxidized wax (B) preferably satisfies physical properties below.

The number average molecular weight (Mn) of olefin-based oxidized wax (B), in terms of polystyrene measured by gel permeation chromatography (GPC), is preferably 300 to 20,000. The upper limit of the number average molecular weight (Mn) is preferably 18,000, more preferably 10,000, further preferably 9,000, particularly preferably 5,000. The lower limit of the number average molecular weight (Mn) is preferably 500, more preferably 1,000, further preferably 1,300. When the number average molecular weight falls within the range, olefin-based oxidized wax (B) is more uniformly dispersed in polyester resin (A), and a resin composition having more sufficient impact resistance is obtained. Processability and kneading properties of the resin composition is also improved.

The melt viscosity at 160°C of olefin-based oxidized wax (B) is preferably 10 to 200,000 mPa·s. The melt viscosity at 160°C of olefin-based oxidized wax (B) is preferably 20 to 50,000 mPa·s, more preferably 40 to 10,000 mPa·s, further preferably 80 to 5,000 mPa·s, particularly preferably 100 to 2,000 mPa·s. When the melt viscosity at 160°C falls within the range, olefin-based oxidized wax (B) is easily compatible with polyester resin (A). Therefore, olefin-based oxidized wax (B) is uniformly dispersed in the resin composition, and therefore a resin composition having more sufficient impact resistance is obtained and the resin composition is also improved in molding processability, specifically, kneading properties, and molding processability in injection molding or the like.

The softening point of olefin-based oxidized wax (B), measured according to JIS K2207, is preferably 70 to 150°C, more preferably 80 to 140°C, further preferably 90°C to 130°C, further preferably 90 to 120°C, particularly preferably 90 to 110°C. When the softening point falls within the range, olefin-based oxidized wax (B) is easily dispersed in polyester resin (A), and a resin composition having more sufficient impact resistance is obtained. Molding processability of the resin composition is also improved.

The density of olefin-based oxidized wax (B), measured according to a density gradient tube method, preferably falls within the range of 900 to 1,200 kg/m³, more preferably 910 to 1,100 kg/m³, further preferably 920 to 1,000 kg/m³, particularly preferably 925 to 980 kg/m³, especially preferably 930 to 975 kg/m³. The density preferably falls within the range because olefin-based oxidized wax (B) is easily dispersed in polyester resin (A) and a resin composition having more sufficient impact resistance is obtained.

### <Unmodified Olefin Wax>

Examples of the C₃₋₁₂ α-olefin in requirement (B-2) include C₃ propylene, C₄ 1-butene, C₅ 1-pentene, C₆ 1-hexene, 4-methyl-1-pentene, and C₈ 1-octene. The homopolymer or copolymer is more preferably a homopolymer or copolymer of at least one selected from ethylene, propylene, 1-butene, 1-hexene, and 4-methyl-1-pentene. The content ratio of the constituent unit can be determined by ¹³C-NMR spectral analysis.

The unmodified olefin wax is preferably a copolymer of ethylene and at least one selected from C₃₋₁₂ α-olefin (hereinafter, also simply referred to as "polyethylene wax" or "unmodified polyethylene wax").

### (Polyethylene Wax)

When the unmodified olefin wax is polyethylene wax, such polyethylene wax is preferably polyethylene wax described in, for example, Japanese Patent Application Laid-Open No. 2009-144146. Particularly preferable polyethylene wax will be described below.

The polyethylene wax is preferably an ethylene homopolymer, or a copolymer mainly made of ethylene, the copolymer including ethylene and C₃₋₁₂ α-olefin.

Examples of the ethylene homopolymer include high-density polyethylene wax, medium-density polyethylene wax, low-density polyethylene wax, and linear low-density polyethylene wax.

### (Other wax)

On the other hand, when the unmodified olefin wax is a copolymer of ethylene and C₃₋₁₂ α-olefin, the amount of an ethylene-derived constituent unit is preferably 91.0 to 99.9mol%, more preferably 93.0 to 99.9mol%, further preferably 95.0 to 99.9mol%, particularly preferably 95.0 to 99.0mol%, and the amount of a C₃ or more α-olefin-derived constituent unit is preferably 0.1 to 9.0mol%, more preferably 0.1 to 7.0mol%, further preferably 0.1 to 5.0mol%, particularly preferably 1.0 to 5.0mol%. The total of the ethylene-derived constituent unit and a C₃₋₁₂ α-olefin-derived constituent unit is preferably 100mol%. While it is not denied that any constituent unit other than ethylene or C₃₋₁₂ α-olefin is contained, the amount of such any other constituent unit is preferably 5mol% or less. The content ratio of the constituent unit can be determined by ¹³C-NMR spectral analysis.

Examples of the C₃₋₁₂ α-olefin here include C₃ propylene, C₄ 1-butene, C₅ 1-pentene, C₆ 1-hexene, 4-methyl-1-pentene, and C₈ 1-octene. In particular, a copolymer of propylene or 1-butene and ethylene imparts favorable surface properties to a molded product because modified olefin wax tends to be hard and less sticky. In addition, a copolymer of propylene or 1-butene and ethylene is preferable from the viewpoint that mechanical strength and heat resistance of the resin composition are high. The reason why the modified olefin wax is thus hard and less sticky, while is not clear, is presumed because propylene and 1-butene allow for an efficient decrease in the melting point due to slight copolymerization as compared with other α-olefins, and thus tend to be high in crystallinity when compared with those having the same melting point. Such α-olefins may be used singly or in combinations of two or more thereof

The unmodified olefin wax may be one obtained by pyrolysis of the 4-methyl-1-pentene/α-olefin copolymer disclosed in WO2011/055803, or may be the 4-methyl-1-pentene-based polymer shown in Japanese Patent Application Laid-Open No. 2015-028187.

### <Oxidation modification>

Modified olefin wax formed by oxidation modification is obtained by bringing the unmodified olefin wax molten into contact with an oxygen- or nitrogen-containing gas under stirring. The unmodified olefin wax is usually obtained by melting at a temperature of 130 to 200°C, preferably 140 to 170°C.

In the oxidation modification, an oxidation reaction is performed by bringing the unmodified olefin wax molten into contact with an oxygen- or nitrogen-containing gas under stirring. The term "oxygen- or oxygen-containing gas" is used with encompassing pure oxygen (which is usually oxygen obtained by liquid air fractional distillation and/or water electrolysis, and which may include other component(s) at impurity levels), and a mixed gas of pure oxygen with other gas, such as air, and ozone.

The method of bringing the unmodified olefin wax into contact with oxygen or the like is specifically preferably a method including continuously feeding an oxygen-containing gas from the lower section of a reactor to bring the gas into contact with polyolefin wax as a raw material. In such a case, the oxygen-containing gas is preferably fed so that the amount of oxygen to be fed to 1 kg of a raw material mixture is about 1.0 to 8.0 NL per minute.

### 3. Inorganic Filler (C)

Inorganic filler (C) is not particularly limited, and any known inorganic filler can be used therefor. Examples include talc, mica, calcium carbonate, hydrotalcite, wollastonite, xonotlite, barium sulfate, calcium sulfate, calcium silicate, clay, a glass fiber, glass beads, a glass flake, a carbon fiber, carbon black, graphite, plaster, magnesium carbonate, magnesium oxide, titanium oxide, titanate such as potassium titanate, iron oxide, alumina, and also powders and fibers of metals such as zinc, copper, iron, aluminum, magnesium, silicon, and titanium. Furthermore, examples include a pumice powder, a pumice balloon, aluminum hydroxide, magnesium hydroxide, basic magnesium carbonate, dolomite, calcium titanate, calcium sulfite, asbestos, montmorillonite, bentonite, and molybdenum sulfide. Such materials can be used singly or as a mixture thereof. In particular, talc, mica, calcium carbonate, and a glass fiber are preferable, and a glass fiber is particularly preferable.

Inorganic filler (C) may have any shape such as particulate, plate-like, rod-like, fibrous, and whisker-like shapes. Inorganic filler (C) may be a product that is commercially available as a filler for a polymer. For example, the material may be a product that is commercially available in the form of any of a powder, a roving, a chopped strand, a compressed mass, a pellet (pelletized), and a granule. When inorganic filler (C) is talc, one formed into a powder, a compressed mass, or a granule is preferable. The resin composition of the present invention may include only one inorganic filler (C), or may include two or more inorganic fillers (C).

Inorganic filler (C), when is a particle, preferably has an average particle size of 1 to 15 µm, more preferably 3 to 14 µm. The average particle size is a value measured by a laser diffraction method.

Inorganic filler (C) is produced by any of various known production methods. For example, in the case of talc, the material can be produced by pulverizing a raw stone of talc by an impact type pulverizer or a micron mill type pulverizer, or by further pulverizing such a raw stone pulverized, by a jet mill or the like, and then classifying and adjusting the resultant by a cyclone, a micron separator or the like.

Inorganic filler (C) may be untreated, or at least one portion thereof may be surface-treated. Examples of a surface treatment agent include an organic titanate-based coupling agent, an organic silane coupling agent, a modified polyolefin obtained by grafting of an unsaturated carboxylic acid or an anhydride thereof, fatty acid, a fatty acid metal salt, and fatty acid ester. Such surface treatment agents may be used singly or in combinations of two or more thereof.

### 4. Other resin

The resin composition of the present invention may further include any resin other than polyester resin (A) and olefin-based oxidized wax (B), as long as the effects of the present invention are not remarkably impaired. The content of such other resin is not particularly limited, and is preferably about 0.1 to 30 parts by mass based on 100 parts by mass of polyester resin (A).

Examples of such other resin include an impact modifier. The following copolymer (D), however, preferably is low in the content or is not contained. Copolymer (D) is a copolymer having an olefin-derived structural unit, an α,β-unsaturated carboxylic acid ester-derived structural unit, and a structural unit having a cyclic oxyhydrocarbon structure.

Examples of the olefin of the olefin-derived structural unit that constitutes copolymer (D) include ethylene, propylene, 1-butene, 1-hexene, 1-octene, and 1-decene, and ethylene is generally adopted. Examples of the α,β-unsaturated carboxylic acid ester of the α,β-unsaturated carboxylic acid ester-derived structural unit include acrylates such as methyl acrylate, ethyl acrylate, and butyl acrylate, and methacrylates such as methyl methacrylate and ethyl methacrylate, and methyl acrylate is generally adopted. Examples of the structural unit having a cyclic oxyhydrocarbon structure include an α,β-unsaturated carboxylic acid glycidyl ester-derived structural unit. Examples of the α,β-unsaturated carboxylic acid glycidyl ester include acrylic acid glycidyl ester and methacrylic acid glycidyl ester, and methacrylic acid glycidyl ester is generally adopted.

Examples of copolymer (D) include an ethylene/methyl acrylate (methyl acrylate)/glycidyl methacrylate copolymer represented by the following structural formula.

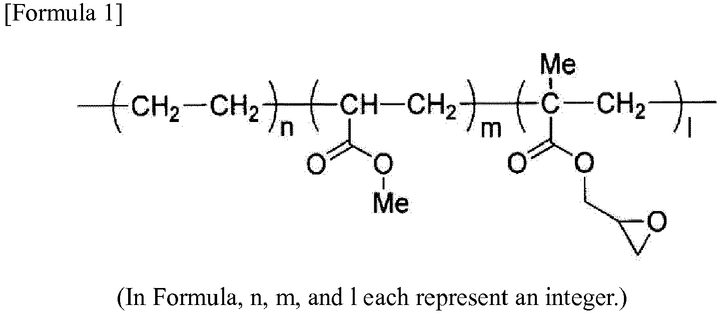

Copolymer (D) represented by the formula usually includes an ethylene unit in a proportion of 30 to 99mass% based on the total amount (100mass%) of an ethylene unit, a methyl acrylate unit, and a glycidyl methacrylate unit. Copolymer (D) represented by the formula usually includes a methyl acrylate unit in a proportion of 0 to 60mass% based on the total amount (100mass%) of an ethylene unit, a methyl acrylate unit, and a glycidyl methacrylate unit. Copolymer (D) represented by the formula usually includes a glycidyl methacrylate unit in a proportion of 1 to 30mass% based on the total amount (100mass%) of an ethylene unit, a methyl acrylate unit, and a glycidyl methacrylate unit.

Copolymer (D) can include any copolymerization component other than the copolymerization components above. Specific examples of such other copolymerization component can include α,β-unsaturated glycidyl ethers such as allyl glycidyl ether and 2-methyl allyl glycidyl ether, aromatic vinyl compounds such as styrene, α-methylstyrene, 4-methylstyrene, 4-methoxystyrene, chlorostyrene, and 2,4-dimethylstyrene, and unsaturated vinyl esters such as vinyl acetate and vinyl propionate.

The content of copolymer (D) is usually less than 3 parts by mass, preferably less than 2 parts by mass, more preferably less than 1.3 parts by mass, further preferably less than 1 part by mass, further preferably less than 0.5 parts by mass, particularly preferably less than 0.2 parts by mass based on 100 parts by mass of the total content of (A), (B) and (C). The content of copolymer (D) preferably falls within the range because of the elastic modulus or the tensile strength of the resin composition.

### 5. Other filler

The resin composition of the present invention may include any filler other than the inorganic filler, namely, a filler made of an organic substance (hereinafter, also referred to as "organic filler"). Examples of the organic filler include lignin, starch, a wood powder, woodfiber, bamboo, cotton, cellulose, natural fibers such as a nanocellulose fiber, and a product containing such a material.

The resin composition may include only one of such an organic filler, or may include two or more of such organic fillers. The content of such organic filler(s) is not particularly limited, and is preferably 70mass% or less, more preferably 30mass% or less, further preferably 20mass% or less in total based on 100mass% of the total mass of polyester resin (A) and olefin-based oxidized wax (B).

### 6. Other additive

The resin composition of the present invention may include any additive other than the filler. Examples of such other additive include a known additive in the polyolefin field. Specific examples of such an additive include a nucleating agent, an anti-blocking agent, a pigment, a dye, a lubricant, a foaming agent, a plasticizer, a release agent, an antioxidant, a flame retardant, an ultraviolet absorber, an anti-bacterial agent, a surfactant, an antistatic agent, a weathering stabilizer, a heat-resistant stabilizer, an anti-slipping agent, a forming agent, a crystallization aid, an antifogging agent, an anti-aging agent, a hydrochloric acid absorber, an impact modifier, a crosslinking agent, a co-crosslinking agent, a crosslinking aid, an adhesive, a softening agent, and a processing aid.

The resin composition may include only one additive, or may two or more additives. The content of such additive(s) is not particularly limited as long as the object of the present invention is not impaired, and the content of each additive is preferably about 0.05 to 70mass% based on 100mass% of the total mass of polyester resin (A) and olefin-based oxidized wax (B). The upper limit is more preferably 30mass%.

### 7. Method for Producing Resin Composition

The resin composition of the present invention can be produced by dry blending or melt blending using any of various methods. A specific method can be, for example, a method where polyester resin (A), olefin-based oxidized wax (B), inorganic filler (C), and any other component(s) are blended at the same time or in any order by a tumbler blender, a V type blender, a Nauta mixer, a Bunbury mixer, kneading roll, a single screw or twin screw extruder, or the like. Alternatively, polyester resin (A), olefin-based oxidized wax (B), inorganic filler (C), and any other component(s) may be blended by dispersing or dissolving in any solvent and thereafter appropriate drying with natural drying, heating forced drying, or the like.

In general, melt blending is more preferable than dry blending from the viewpoint of appearance properties and impact resistance of a molded article obtained. In addition, appearance properties and impact resistance of a molded article obtained tend to be enhanced by sufficient kneading particularly with melt blending. In particular, when two or more compounds are used in combination as olefin-based oxidized waxes (B), it is preferable in terms of handling that two or more olefin-based oxidized waxes (B) be dry-blended or melt-blended in advance. As the method of melt blending, the above method, a method where a batch tank is used, or the like is appropriately used.

### 8. Physical Properties of Resin Composition

The MFR (230°C, test load: 2.16 kgf) of the resin composition of the present invention, measured according to JIS K7210, is preferably 0.01 to 100 g/10 min, more preferably 0.1 to 50 g/10 min, further preferably 0.5 to 30 g/10 min, particularly preferably 1 to 20 g/10 min, further preferably 3 to 15 g/10 min. When the MFR of the resin composition falls within the range, the resin composition satisfies processability, and heat resistance and mechanical strength of a molded article, in a well-balanced manner.

In the resin composition of the present invention, the torque value (steady value of torque) after 10 minutes in melt-kneading in conditions of a set temperature of 210°C, an amount of the resin loaded of 50 g, 50 rpm, and 10 minutes by using a twin screw batch type melt-kneading apparatus is preferably 4 N/m or less.

The bending elastic modulus of the resin composition of the present invention, measured according to JIS K7171, is preferably 8,000 MPa or more. The bending elastic modulus more preferably falls within the range of 8,000 to 10,000 MPa.

The Charpy impact strength at 23°C of the resin composition of the present invention, measured according to JIS K7111, is preferably 13.0 kJ/m² or more, more preferably 14.0 kJ/m² or more, further preferably 15.0 kJ/m² or more. The upper limit is usually 20.0 kJ/m² or less. Furthermore, the Charpy impact strength at -30°C is preferably 11.0 kJ/m² or more, more preferably 12.0 kJ/m² or more, further preferably 13.0 kJ/m² or more. The upper limit is usually 18.0 kJ/m² or less.

### B. Molded Article

The molded article of the present invention can be produced by molding the resin composition to a desired shape according to a conventionally known method such as injection molding, coating, extrusion molding, or compression molding. The shape of the molded article is not particularly limited, and is, for example, a film-like, plate-like, prismatic, or cylindrical shape. The molded article of the present invention can be used in any application that is the same as in a conventionally known polyester resin. Specifically, the molded article can be used in automobile components, home electronic components, and the like.

### Examples

The present invention will be described based on Examples in detail, but the present invention is not limited to such Examples.

### 1. Polyester Resin (A)

A polybutylene terephthalate resin, Duranex 2002 manufactured by WinTech Polymer Ltd., was used as polyester resin (A). As a result of measurement according to the following methods, polyester resin (A) had a melting point (Tm) of 225°C, a crystallization temperature (Tc) of 201°C, a number average molecular weight (Mn) of 28,300, a weight average molecular weight (Mw) of 83,300, and a density of 1,310 kg/m³.

### <Melting point (Tm) and Crystallization temperature (Tc)>

Measurement was conducted using DSC-20 (manufactured by Seiko Instruments Inc.) according to a differential scanning calorimetric method (DSC). About 10 mg of a specimen was sealed in an aluminum pan and heated from 0°C to 280°C at 10°C/min, and the endothermic peak in a curve obtained was determined as the melting point. Before the temperature rise measurement, an operation where the specimen was heated to about 280°C once and kept for 5 minutes, and thereafter cooled to 0°C at 10°C/min was performed, to standardize the thermal history of the specimens. When a plurality of endothermic peaks were present in the curve obtained, the peak temperature where the maximum among the endothermic amounts at such endothermic peaks was observed was determined as the melting point (Tm). The crystallization temperature (Tc) was defined as the value of the exothermic peak of the curve obtained.

### <Mn and Mw>

The number average molecular weight (Mn) and the weight average molecular weight (Mw) were determined from GPC measurement. The measurement was performed in the following conditions. The number average molecular weight Mn and the weight average molecular weight Mw were determined by the calibration curve made with commercially available monodispersed standard polystyrene.

Apparatus: 515 pump, 717 plus Autosampler (manufactured by Waters Corporation)
Solvent: chloroform
Column: PL gel 5 µ MIXED - D 7.5 × 300 mm × 2 (manufactured by Polymer Laboratories Limited)
Flow rate: 1.0 ml/min
Specimen: 1.2 mg/mL chloroform
Temperature: 40°C

### <Density>

Measurement was conducted according to ISO 1183.

### 2. Olefin-based oxidized wax (B)

B1 to B3 produced by a method described below were each used as olefin-based oxidized wax (B). In Comparative Examples, B'1 and B'2 produced by a method described below were each used as a wax not falling under olefin-based oxidized wax (B), Lotader AX8900 manufactured by Arkema S.A. (D1) was used as impact resistance modifier (D), and Tafmer MH5020 manufactured by Mitsui Chemicals Inc. (D2) or EM505 (MBS) manufactured by LG Chem (D3) was used as other impact modifier.

The constitutions and physical properties were analyzed by the following methods.

### <Constitution of Polymer Before Modification>

The content proportions of an ethylene-derived constituent unit and a C₃₋₄ α-olefin-derived constituent unit of each polymer before modification were determined by ¹³C-NMR spectral analysis. In Table 1, C2 means ethylene, and C3 means propylene.

### <Mn, Mw, and Mw/Mn>

The number average molecular weight Mn, the weight average molecular weight (Mw), and the molecular weight distribution (Mw/Mn) were determined from GPC measurement. The measurement was performed in the following conditions. The number average molecular weight Mn and the weight average molecular weight Mw were determined by the calibration curve made with commercially available monodispersed standard polystyrene.

Apparatus: gel permeation chromatograph Alliance GPC2000 Model (manufactured by Waters Corporation)
Solvent: o-dichlorobenzene
Column: TSK gel GMH6-HT × 2 and TSK gel GMH6-HTL column × 2 (both manufactured by Tosoh Corporation)
Flow rate: 1.0 ml/min
Specimen: 0.15 mg/mL o-dichlorobenzene solution
Temperature: 140°C

### <Softening Point>

Measurement was conducted by a ring-and-ball method according to JIS K2207.

### <Density>

Measurement was conducted according to JIS K7112.

### <Crystallinity>

A measurement sample was hot-pressed at 180°C for 5 minutes, and then cold-pressed with water cooling for 5 minutes, thereby producing a press sheet having a thickness of 1 mm. The resulting press sheet was subjected to measurement of an X-ray profile by a transmission method with an X-ray diffraction apparatus (RINT 2500 manufactured by Rigaku Corporation) having a rotation specimen stage, in conditions of 50 kV-300 mA. After peaks were assigned as crystalline or amorphous from the resulting X-ray profile, the crystallinity was calculated.

### <Crystallization Temperature>

Measurement was conducted using a differential scanning calorimeter (DSC). First, a measurement specimen was heated to 200°C once and kept for 5 minutes, and then cooled to 30°C at 20°C/min. The value of the exothermic peak of the curve obtained from the measurement results was defined as the crystallization temperature.

### <Acid Value>

Measurement was conducted according to JIS K5902. Herein, an acid value of 11 mgKOH/g is converted into a content rate of a polar group of 1 mass%.

### [Production Example 1]

### Production of B1

A glass reactor was charged with 500 g of unmodified olefin wax obtained by adjusting the amounts of propylene and hydrogen loaded, as production conditions of unmodified olefin wax (B'1), described below, and the wax was molten at 160°C under a nitrogen atmosphere. Next, 1 L/min of dry air was continuously fed over 2 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B1. Physical properties are shown in Table 1.

### [Production Example 2]

### Production of B2

A glass reactor was charged with 500 g of unmodified olefin wax obtained by adjusting the amounts of propylene and hydrogen loaded, as production conditions of unmodified olefin wax (B'1), described below, and the wax was molten at 160°C under a nitrogen atmosphere. Next, 1 L/min of dry air was continuously fed over 2 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B2. Physical properties are shown in Table 1.

### [Production Example 3]

### Production of B3

A glass reactor was charged with 500 g of unmodified olefin wax obtained by adjusting the amounts of propylene and hydrogen loaded, as production conditions of unmodified olefin wax (B'1), described below, and the wax was molten at 160°C under a nitrogen atmosphere. Next, 1.2 L/min of dry air was continuously fed over 2 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B3. Physical properties are shown in Table 1.

### [Production Example 4] Production of B4

A glass reactor was charged with 500 g of unmodified olefin wax obtained by adjusting the amounts of propylene and hydrogen loaded, as production conditions of unmodified olefin wax (B'1), described below, and the wax was molten at 160°C under a nitrogen atmosphere. Next, 0.6 L/min of dry air was continuously fed over 2 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B4. Physical properties are shown in Table 1.

### [Production Example 5] Production of B5

A glass reactor was charged with 500 g of unmodified olefin wax obtained by loading no polypropylene and adjusting the amount of hydrogen loaded, as production conditions of unmodified olefin wax (B'1), described below, and the wax was molten at 160°C under a nitrogen atmosphere. Next, 2 L/min of dry air was continuously fed over 2 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B5. Physical properties are shown in Table 1.

### [Production Example 6]

### Production of B'1

### 1. Preparation of Catalyst

In a glass autoclave having an inner volume of 1.5 L, 25 g of commercially available anhydrous magnesium chloride was suspended in 500 ml of hexane. While the resulting suspension was kept at 30°C and stirred, 92 ml of ethanol was dropped thereinto over 1 hour, and then a reaction was allowed to run for additional 1 hour. After completion of the reaction, 93 ml of diethyl aluminum monochloride was dropped over 1 hour, and a reaction was allowed to run for additional 1 hour. After completion of the reaction, 90 ml of titanium tetrachloride was dropped, and a reaction vessel was heated to 80°C to allow a reaction to run for 1 hour. After completion of the reaction, a solid portion was washed with hexane by decantation until no free titanium was detected. The resultant was defined as a hexane suspension and subjected to quantitative determination of the titanium concentration by titration, and was subjected to the following experiments.

### 2. Production of Ethylene/Propylene Copolymer (Unmodified Olefin Wax B'1)

A stainless autoclave having an inner volume of 2 L, sufficiently purged with nitrogen, was charged with 930 ml of hexane and 70 ml of propylene, and hydrogen was introduced thereinto until a pressure of 20.0 kg/cm² (gauge pressure) was achieved. Next, the temperature in the system was raised to 170°C, and thereafter 0.1 mmol of triethyl aluminum , 0.4 mmol of ethyl aluminum sesquichloride and the resulting solid in hexane were injected with ethylene so that the titanium component, in terms of atoms, was 0.008 mmol, thereby initiating polymerization.

Thereafter, only ethylene was continuously fed to thereby keep the total pressure at 40 kg/cm² (gauge pressure), and polymerization was performed at 170°C for 40 minutes.

After a small amount of ethanol was added into the system to terminate polymerization, and unreacted ethylene and propylene were purged. The resulting polymer solution was subjected to drying at 100°C under reduced pressure overnight to obtain an ethylene/propylene copolymer. The polymer was defined as B'1.

### [Production Example 7]

### Production of B'2

A glass reactor was charged with 500 g of unmodified olefin wax (B'1), and the wax was molten at 160°C under a nitrogen atmosphere. Next, 30 g of maleic anhydride and 3 g of di-t-butyl peroxide (hereinafter, abbreviated as "DTBPO") were continuously fed to the reaction system (temperature: 160°C) over 5 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B'2. Physical properties are shown in Table 1.

In the constitution in Table 1, "C2" represents an ethylene-derived constituent unit, and "C3" represents a propylene-derived constituent unit, respectively. In addition, for example, "C3: 4mol%" represents inclusion of 4mol% of a propylene-derived constituent unit.

**[Table 1]**

| Olefin-based oxidized wax (B) | | B1 | B2 | B3 | B4 | B5 | B'1 | B'2 |
|---|---|---|---|---|---|---|---|---|
| Modification | | Oxidized | Oxidized | Oxidized | Oxidized | Oxidized | Unmodified | Acid-modified |
| Synthesis method | | Polymerization | Polymerization | Polymerization | Polymerization | Polymerization | Polymerization | Polymerization |
| Constitution | | C2/C3 | C2/C3 | C2/C3 | C2/C3 | C2 | C2/C3 | C2/C3 |
| | | C3: 3 mol% | C3: 5 mol% | C3: 1 mol% | C3: 0.4 mol% | C3: 0 mol% | C3: 4 mol% | C3: 4 mol% |
| Mn | In terms of PS | 2190 | 2060 | 2130 | 3990 | 9280 | 1350 | 1760 |
| Mw | In terms of PS | 11360 | 12560 | 13000 | 32000 | 26200 | 2620 | 4150 |
| Mw/Mn | - | 5.2 | 6.1 | 6.1 | 8.0 | 2.8 | 1.9 | 2.4 |
| Softening point | °C | 107 | 98 | 115 | 130.5 | 130.5 | 113 | 108 |
| Density | kg/m³ | 946 | 937 | 970 | 970 | 988 | 922 | 938 |
| Crystallinity | % | 62 | 47 | 75 | 78 | 86 | 80 | 60 |
| Crystallization temperature | °C | 79 | 74 | 93 | 105 | 111 | 91 | 88 |
| Acid value | mgKOH/g | 17 | 17 | 20 | 10 | 15 | 0 | 60 |

### 3. Inorganic Filler (C)

A glass fiber (CSF3PE-941S manufactured by Nitto Boseki Co., Ltd.) was used as inorganic filler (C).

### [Examples 1 to 5 and Comparative Examples 1 to 7]

### (Production of Resin Composition)

Polyester resin (A), as well as olefin-based oxidized wax (B), a wax not falling under olefin-based oxidized wax (B), or impact resistance modifier (D), and other impact modifier were dry-blended at each compounding ratio shown in Table 2, and loaded through a hopper. The blended product was melt-kneaded with a co-rotation twin screw extruder, HK25D manufactured by Parker Corporation, Inc. (φ25 mm, L/D = 41)in condition of a number of screw rotations of 120 rpm, an amount of feed of 10 kg/h, and an exit temperature of 260°C, then the resultant was water-cooled to form a strand. The glass fiber used as inorganic filler (C) was loaded through a side feeder. Such a melt-kneaded product was cut to produce a pellet.

Each resin composition obtained was evaluated according to the following criteria. The results are shown in Table 2.

### (Evaluation of Resin Composition)

### <Torque>

The torque value of the twin screw extruder was measured at the time of stabilization of a running state after 10 minutes from the start of melt-kneading.

### <Mold Releasability>

The resulting pellet-shaped resin composition was dried at 120°C for 5 hours and then injected with an injection molding machine (PNX60 manufactured by Nissei Plastic Industrial Co., Ltd.) in conditions of a cylinder temperature of 250°C, a number of screw rotations of 80 rpm, an injection pressure of 140 MPa, and a mold temperature of 90°C, thereby producing a test piece having a cup shape (φ50 mm × h 50 mm × t 1.6 mm). An ejector was operated, and the stress applied in releasing of such a molded product having a cup shape from a mold, was measured by a pressure sensor. The mold releasability was evaluated from the stress for releasing, according to the following criteria.
A: the stress for releasing was less than 10 MPa
B: the stress for releasing was 10 MPa or more and less than 20 MPa
C: the stress for releasing was 20 MPa or more
D: the molded product was not released from the mold

### [Production of Test Piece]

The resulting pellet-shaped resin composition was dried at 120°C for 5 hours, and thereafter injected with an injection molding machine (Niigata NN100 manufactured by Niigata Machine Techno Co., Ltd.) in conditions of a cylinder temperature of 250°C, a number of screw rotations of 75 rpm, an injection pressure of 140 MPa, and a mold temperature of 75°C, thereby producing a test piece.

### [Evaluation of Test Piece]

The resulting test piece was evaluated with respect to the Charpy impact test (at 23°C and -30°C), the tensile test (tensile strength and elongation), and the bending test (bending strength and bending elastic modulus), as described below. The evaluation results are shown in Table 2.

### <Charpy Impact Test>

The Charpy impact test was performed at 23°C and -30°C according to JIS K7111. A notch was machined, and the test piece had a size of 10 mm (width) × 4 mm (thickness) × 80 mm (length).

### <Tensile Test (Tensile Strength and Elongation)>

The tensile strength and the tensile elongation rate were measured based on JIS K7162 in conditions of a load range of 2 kN and a test speed of 50 mm/min.

### <Bending Test (Bending Strength and Bending Elastic Modulus)>

The bending strength and the bending elastic modulus were measured based on JIS K7171 in conditions of a load range of 200 N, a test speed of 2 mm/min, and a bending span of 64 mm.

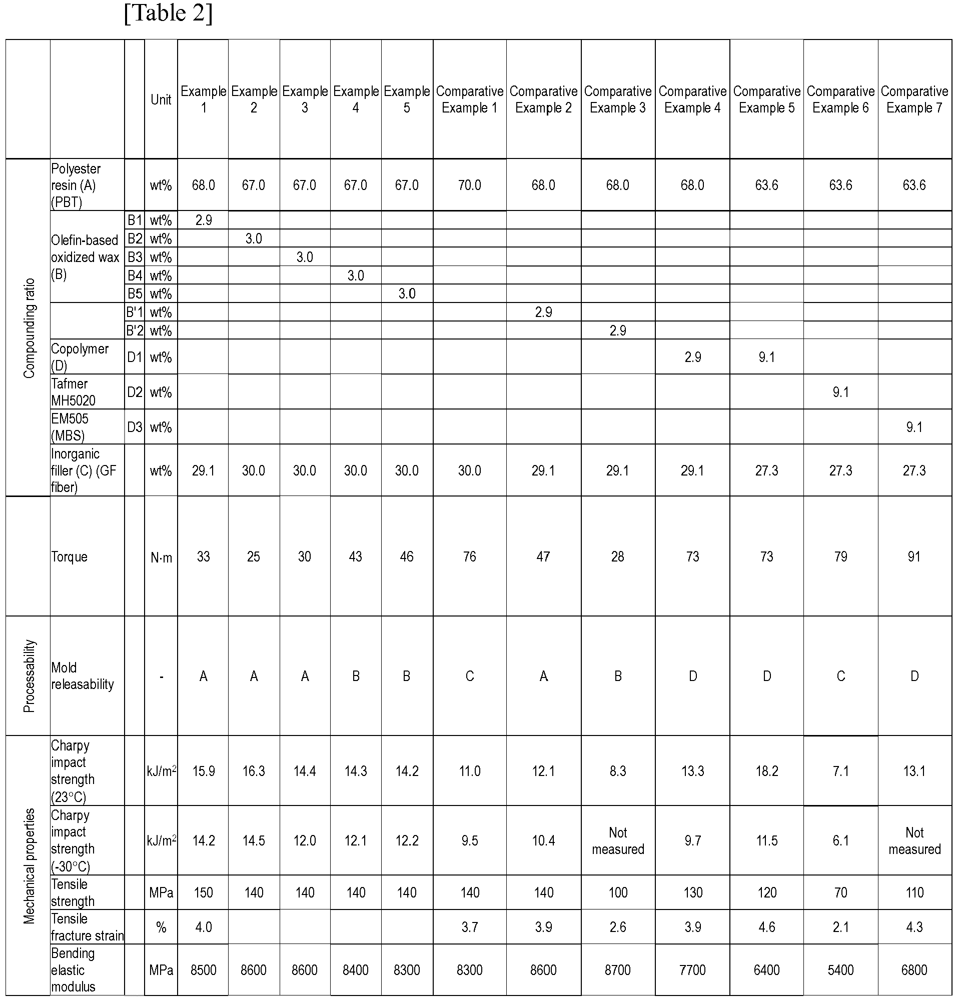

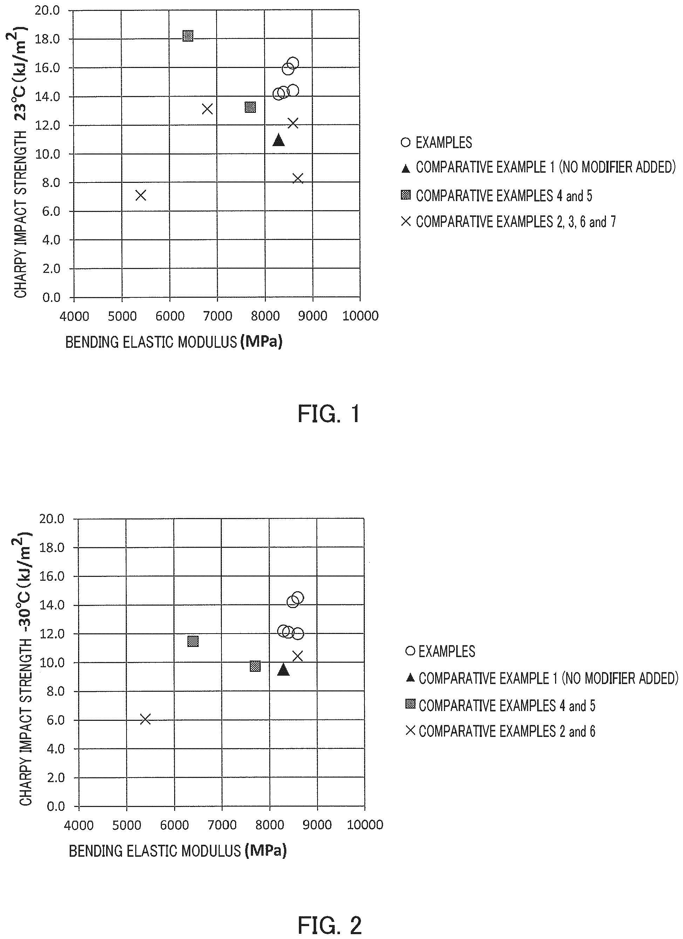

The graphs each plotting a relationship between the bending elastic modulus and the Charpy impact strength of each of the resin compositions obtained in Examples and Comparative Examples are illustrated in FIG. 1 (Charpy impact strength at 23°C) and FIG. 2 (Charpy impact strength at -30°C).

Any resin composition containing polyester resin (A), olefin-based oxidized wax (B), and inorganic filler (C) at a predetermined proportion was high in all impact resistance, tensile strength, and elastic modulus, as shown in Table 2, FIG. 1, and FIG. 2. In addition, any resin composition containing polyester resin (A), olefin-based oxidized wax (B), and inorganic filler (C) at a predetermined proportion was low in torque, namely, excellent in mechanical properties and molding processability.

On the contrary, the impact resistance of any resin composition not containing olefin-based oxidized wax (B), but containing a wax not falling under olefin-based oxidized wax (B) or impact resistance modifier (D) instead, was not sufficiently enhanced, or the impact resistance was enhanced but the tensile strength or elastic modulus was decreased.

The present application claims the priority based on Japanese Patent Application No. 2016-202820 filed on October 14, 2016, and the contents described in the claims, specification and drawings of the Application are herein incorporated.

### Industrial Applicability

The resin composition of the present invention can be enhanced in all of impact resistance, tensile strength, elastic modulus, and molding processability. Therefore, the resin composition of the present invention can be applied to various resin molded articles.

## Claims

1. A resin composition containing a polyester resin (A), an olefin-based oxidized wax (B), and an inorganic filler (C), wherein
the resin composition comprises 50 to 95 parts by mass of (A), 0.5 to 10 parts by mass of (B), and 5 to 40 parts by mass of (C), provided that a total content of (A), (B) and (C) is 100 parts by mass,
(A) satisfies the following (A-1) and (A-2), and
(B) satisfies the following (B-1) and (B-2),
(A-1) an aromatic dicarboxylic acid-derived constituent unit (a1) and a C₂₋₁₀ diol-derived constituent unit (a2) are contained, and
(A-2) a melting point (Tm) according to a differential scanning calorimeter (DSC) falls within the range of 200 to 245°C;
(B-1) a weight average molecular weight Mw in terms of polystyrene measured by gel permeation chromatography (GPC) is 8,000 to 20,000, and
(B-2) (B) is an oxidation modified product of a homopolymer or copolymer of at least one selected from ethylene and C₃₋₁₂ α-olefin.

2. The resin composition according to claim 1, wherein (B) is an oxidation modified product of a copolymer of ethylene and at least one α-olefin selected from C₃₋₁₂ α-olefin, in (B-2).

3. The resin composition according to claim 1 or 2, wherein (B) satisfies the following (B-3),
(B-3) an acid value is 1 to 40 mgKOH/g.

4. The resin composition according to any one of claims 1 to 3, wherein (B) satisfies the following (B-4),
(B-4) a crystallinity is 70% or less.

5. The resin composition according to any one of claims 1 to 4, wherein (A) satisfies the following (A-3),
(A-3) a crystallization temperature (Tc) according to a differential scanning calorimeter (DSC) is 150°C or more.

6. The resin composition according to any one of claims 1 to 5, containing a glass fiber as (C).

7. The resin composition according to any one of claims 1 to 6, wherein (A) contains polybutylene terephthalate.

8. The resin composition according to any one of claims 1 to 7, comprising 55 to 80 parts by mass of (A), 2 to 5 parts by mass of (B), and 20 to 40 parts by mass of (C), provided that a total content of (A), (B) and (C) is 100 parts by mass.

9. A molded article, comprising the resin composition according to any one of claims 1 to 8.
